# EUROPEAN PATENT APPLICATION

(11) **EP 4 310 954 A1**
(43) Date of publication of application: **24.01.2024**
(21) Application number: 23715411.7
(22) Date of filing: 23.03.2023
(51) Int. Cl.: H01M 4/525, C01G 53/00, H01M 4/36, H01M 4/505, H01M 10/052, H01M 10/0562

(54) **POSITIVE ELECTRODE ACTIVE MATERIAL FOR LITHIUM ION BATTERY, POSITIVE ELECTRODE FOR LITHIUM ION BATTERY, LITHIUM ION BATTERY, POSITIVE ELECTRODE ACTIVE MATERIAL FOR ALL-SOLID-STATE LITHIUM ION BATTERY, POSITIVE ELECTRODE FOR ALL-SOLID-STATE LITHIUM ION BATTERY, ALL-SOLID-STATE LITHIUM ION BATTERY, METHOD FOR PRODUCING POSITIVE ELECTRODE ACTIVE MATERIAL FOR LITHIUM ION BATTERY, AND METHOD FOR PRODUCING POSITIVE ELECTRODE ACTIVE MATERIAL FOR ALL-SOLID-STATE LITHIUM ION BATTERY**

(30) Priority: 24.03.2022 JP 2022048896; 14.07.2022 JP 2022113470
(71) Applicant: JX Nippon Mining & Metals Corporation, Tokyo 105-8417 (JP)
(72) Inventor: The designation of the inventor has not yet been filed
(74) Representative: Yeadon IP Limited
(86) International application number: PCT/JP2023/011631
(87) International publication number: WO 2023/182458

(57) **Abstract**

A positive electrode active material for lithium ion batteries, the positive electrode active material being represented by a composition shown in the following formula (1):

LiₐNi_{b}Co_{c}Mn_{d}MₑO_{f} (1)

in which formula (1), 1.0 ≤ a≤ 1.05, 0.8 ≤ b ≤ 0.9, b + c + d + e = 1, 1.8 ≤ f ≤ 2.2, 0.0025 ≤ e / (b + c + d + e) ≤ 0.016, and M is at least one selected from Zr, Ta and W;
wherein WDX mapping analysis of positive electrode active material particles in a field of view of 50 µm × 50 µm by FE-EPMA indicates that an oxide of the M adheres to surfaces of the positive electrode active material particles, and the oxide of the M is not present as independent particles that do not adhere to the surfaces of the positive electrode active material particles.

## Description

### FIELD OF THE INVENTION

The present invention relates to a positive electrode active material for lithium ion batteries, a positive electrode for lithium ion batteries, a lithium ion battery, a positive electrode active material for all-solid lithium ion batteries, a positive electrode for all-solid lithium ion batteries, an all-solid lithium ion battery, a method for producing positive electrode active material for lithium ion batteries, and a method for producing a positive electrode active material for all-solid lithium ion batteries.

### BACKGROUND OF THE INVENTION

With rapidly spreading of information relational devices and communication devices such as personal computers, video cameras, and mobile phones in recent years, development of batteries used as their power sources has been emphasized. Among the batteries, lithium ion secondary batteries are attracting attention in terms of high energy density. The lithium ion secondary batteries include liquid-type lithium ion secondary batteries using an electrolytic solution and all-solid lithium ion batteries using a solid electrolyte, which have been attracting attention in recent years.

In the 1990s to 2000s, the most commonly used positive electrode active material for lithium ion secondary batteries was LiCoO₂ and the like. In place of this, demand for Li(Ni, Co, Al)O₂ and Li(Ni, Co, Mn)O₂, and the like, which have a high Ni ratio, have been increasing from the 2010s in order to solve the problems of an increased energy consumption caused by highly functional electronic devices and longer cruising distance due to the rise of EVs. Although the Li(Ni, Co, Al)O₂, Li(Ni, Co, Mn)O₂ and the like have been used more and more due to their high capacity, but they have problems such as lower thermal stability and poor cycle characteristics. These problems have been overcome by a method of surface-modifying the positive electrode material with an element such as Zr, W, Nb, or Ta, which has a large ionic radius and a higher affinity for oxygen.

Patent Literature 1 discloses a positive electrode active material which is a lithium-nickel-cobalt-manganese composite oxide containing tungsten and niobium. It also discloses that according to such a composition, it is possible to provide a positive electrode active material that has improved output characteristics and less gas generation, and a battery using the same.

Patent Literature 2 discloses a method for producing a lithium-containing composite oxide, characterized by using a transition metal hydroxide having a crystallite diameter of 35 nm or less on the (100) plane in a space group P3m1 crystal structure model in an X-ray diffraction pattern, when a transition metal hydroxide essentially containing Ni and Mn is mixed with a lithium source and fired to produce the lithium-containing composite oxide. It also discloses that such a configuration can provide a method for producing a lithium-containing composite oxide capable of improving performance such as cycle characteristics and rate characteristics for a lithium ion secondary battery.

### CITATION LIST

### Patent Literatures

[Patent Literature 1] Japanese Patent Application Publication No. 2009-140787 A
[Patent Literature 2] Japanese Patent Application Publication No. 2016-44120 A

### SUMMARY OF THE INVENTION

Patent Literatures 1 and 2 disclose that the surface modification with elements such as Zr, W, and Nb improves battery characteristics such as cycle characteristics, thermal stability, and rate characteristics. These literatures disclose a production method aimed at solid solution of elements different from those forming a precursor (the elements being referred to as different elements) in the positive electrode active material by kneading oxides of the different elements to the precursor or calcined powder of the precursor simultaneously with a lithium source in a dry process to fire it. However, it is not easy to allow the different elements to adhere efficiently to the precursor or the calcined powder, resulting in the different elements that do not adhere to the surface of the precursor, and finally independent particles that do not adhere to the surface of the positive electrode active particles. In this case, there arises a problem that the battery characteristics are not improved.

The present invention has been made to solve the problems as described above. An object of the present invention is to provide a positive electrode active material for lithium ion batteries that provides good battery characteristics upon use in the lithium ion batteries, a positive electrode for lithium ion batteries, a lithium ion battery and a method for producing a positive electrode active material for lithium ion batteries. Also, an object of the present invention is to provide a positive electrode active material for all-solid lithium ion batteries that provides good battery characteristics upon use in all-solid lithium ion batteries, a positive electrode for all-solid lithium ion batteries, an all-solid lithium ion battery, and a method for producing a positive electrode active material for all-solid lithium ion batteries.

The present invention completed based on the above findings is defined by the following aspects 1 to 12:
1. A positive electrode active material for lithium ion batteries, the positive electrode active material being represented by a composition shown in the following formula (1):

   LiₐNi_{b}Co_{c}Mn_{d}MₑO_{f} (1)

   in which formula (1), 1.0 ≤ a ≤ 1.05, 0.8 ≤ b ≤ 0.9, b + c+ d + e = 1, 1.8 ≤ f ≤ 2.2, 0.0025 ≤ e / (b + c + d + e) ≤ 0.016, and M is at least one selected from Zr, Ta and W;
   wherein WDX mapping analysis of positive electrode active material particles in a field of view of 50 µm × 50 µm by FE-EPMA indicates that an oxide of the M adheres to surfaces of the positive electrode active material particles, and the oxide of the M is not present as independent particles that do not adhere to the surfaces of the positive electrode active material particles.
2. The positive electrode active material for lithium ion batteries according to the aspect 1, wherein the positive electrode active material for lithium ion batteries has a 50% cumulative volume particle size D50 of 3 to 18 µm.
3. A positive electrode for lithium ion batteries, comprising the positive electrode active material for lithium ion batteries according to the aspect 1 or 2.
4. A lithium ion battery comprising the positive electrode for lithium ion batteries according to the aspect 3 and a negative electrode.
5. A positive electrode active material for all-solid lithium ion batteries, comprising:
   the positive electrode active material for lithium ion batteries according to the aspect 1 or 2; and
   a coating layer made of an oxide of Li and Nb, the coating layer being provided on a positive electrode active material particle surface of the positive electrode active material for lithium ion batteries.
6. The positive electrode active material for all-solid lithium ion batteries according to the aspect 5, wherein a content of Nb in the positive electrode active material for all-solid lithium ion batteries is 0.5 to 0.8% by mass.
7. A positive electrode for all-solid lithium ion batteries, comprising the positive electrode active material for all-solid lithium ion batteries according to the aspect 5.
8. An all-solid lithium ion battery comprising the positive electrode for all-solid lithium ion batteries according to the aspect 7 and a negative electrode.
9. A method for producing a positive electrode active material for lithium ion batteries, the method comprising the steps of:
   providing a precursor of the positive electrode active material for lithium ion batteries, the precursor being represented by a composition shown in the following formula (2):

      Ni_{b}Co_{c}Mn_{d}(OH)₂ (2)

      in which formula 2), 0.8 ≤ b ≤ 0.9, 0.07 ≤ c ≤ 0.15, and b + c + d = 1;
   mixing at least one selected from an oxide of Zr, an oxide of Ta and an oxide of W, which has a 50% cumulative volume particle size D50 of 1 µm or less, with the precursor of the positive electrode active material for lithium ion batteries in a wet process to obtain a mixture; and
   mixing the mixture with a lithium source in a dry process and firing it at 700°C or more for 4 hours or more.
10. The method for producing a positive electrode active material for lithium ion batteries according to the aspect 9, wherein each of the oxide of Zr, the oxide of Ta and the oxide of W has a D50 of 0.3 to 1.0 µm.
11. The method for producing a positive electrode active material for lithium ion batteries according to the aspect 9, wherein the step of firing the mixture comprises mixing the mixture with the lithium source in the dry process and firing it at 700 to 800 °C for 4 to 12 hours.
12. A method for producing a positive electrode active material for all-solid lithium ion batteries, the method comprising the steps of:
   providing the positive electrode active material for lithium ion batteries produced by the method according to any one of the aspects 9 to 11;
   forming a coating layer made of an oxide of Li and Nb on a positive electrode active material particle surface of the positive electrode active material for lithium ion batteries using an aqueous solution containing Li and Nb.

According to the present invention, it is possible to provide a positive electrode active material for lithium ion batteries that provides good battery characteristics upon use in the lithium ion batteries, a positive electrode for lithium ion batteries, a lithium ion battery and a method for producing a positive electrode active material for lithium ion batteries. Also, according to the present invention, it is possible to provide a positive electrode active material for all-solid lithium ion batteries that provides good battery characteristics upon use in all-solid lithium ion batteries, a positive electrode for all-solid lithium ion batteries, an all-solid lithium ion battery, and a method for producing a positive electrode active material for all-solid-state lithium ion batteries.

### BRIEF DESCRIPTION OF THE DRAWINGS

FIG. 1 illustrates: a left view showing a SEM image of positive electrode active material particles by FE-EPMA showing an example of a state where "an oxide of M adheres to surfaces of the positive electrode active material particles, and the oxide of the M is not present as independent particles that do not adhere to the surfaces of the positive electrode active material particles" (Example 6); the right view of FIG. 1 showing a WDX mapping image of Zr by FE-EPMA corresponding to the left view of FIG. 1;
FIG. 2 illustrates: the left view showing a SEM image of positive electrode active material particles by FE-EPMA showing an example of a state where "an oxide of M is present as independent particles that do not adhere to the surfaces of the positive electrode active material particles" (Comparative Example 5). The right view of FIG. 2 is a WDX mapping image of Zr by FE-EPMA corresponding to the left view of FIG. 2;
FIG. 3 shows SEM images by FE-EPMA for positive electrode active material particles according to Examples 1 to 6 and WDX mapping images of Zr by FE-EPMA, which correspond to the SEM images;
FIG. 4 shows SEM images by FE-EPMA for positive electrode active material particles according to Examples 7 to 12 and WDX mapping images of Ta or W by FE-EPMA, which correspond to the SEM images;
FIG. 5 shows SEM images by FE-EPMA for positive electrode active material particles according to Examples 13 to 17 and WDX mapping images of Zr or Ta by FE-EPMA, which correspond to the SEM images;
FIG. 6 shows SEM images by FE-EPMA for positive electrode active material particles according to Comparative Examples 5 to 7 and WDX mapping images of Zr, Ta, or W by FE-EPMA, which correspond to the SEM images;
FIG. 7 shows SEM images by FE-EPMA for positive electrode active material particles according to Examples 18 to 20 and WDX mapping images of Zr, Ta, or W by FE-EPMA, which correspond to the SEM images; and
FIG. 8 is a schematic view of an all-solid lithium ion battery according to an embodiment of the present invention.

### DETAILED DESCRIPTION OF THE INVENTION

Hereinafter, embodiments of the present invention will be described with reference to the drawing. However, the present invention is not limited to these embodiments, and various changes, modifications, and improvements may be made based on knowledge of one of ordinary skill in the art, without departing from the scope of the present invention.

### (Positive Active Material for Lithium Ion Batteries)

In the present invention, when it is simply referred to as the "positive electrode active material for lithium ion batteries", it means that the positive electrode active material for lithium ion batteries includes both a liquid-type positive electrode active material using an electrolytic solution and a positive electrode active material for all-solid lithium ion batteries having a solid electrolyte.

The positive electrode active material for lithium ion batteries according to the embodiment of the present invention is represented by a composition shown in the following formula (1):

LiₐNi_{b}Co_{c}Mn_{d}MₑO_{f} (1)

in which formula (1), 1.0 ≤ a ≤ 1.05, 0.8 ≤ b ≤ 0.9, b + c + d + e = 1, 1.8 ≤ f ≤ 2.2, 0.0025 ≤ e / (b + c + d + e) ≤ 0.016, and M is at least one selected from Zr, Ta and W.

In the positive electrode active material for lithium ion batteries, the symbol a indicating the lithium composition in the above formula (1) is controlled to 1.0≤ a ≤ 1.05. Since the symbol a indicating the lithium composition is 1.0 or more, reduction of nickel due to lithium deficiency can be suppressed. Further, since the symbol a indicating the lithium composition is 1.05 or less, residual alkaline components such as lithium carbonate and lithium hydroxide, which are present on the surfaces of the positive electrode active material particles and can become resistant components when used as a battery, can be suppressed.

The positive electrode active material for lithium ion batteries has a so-called high-nickel composition in which the symbol b indicating the nickel composition is controlled to 0.8 ≤ b ≤ 0.9 in the above formula (1). Since the symbol b indicating the nickel composition is 0.8 or more, a good battery capacity of the lithium ion battery can be obtained.

The positive electrode active material for lithium ion batteries has the above formula (1) in which the total of the symbol b indicating the nickel composition, the symbol c indicating the cobalt composition, the symbol d indicating the manganese composition, and the symbol e indicating at least one composition selected from Zr, Ta and W is controlled to b + c + d + e = 1, i.e., 0.1 ≤ c + d + e ≤ 0.2, so that the cycle characteristics can be improved, thereby reducing the expansion and contraction behavior of the crystal lattice due to the insertion and extraction of lithium associated with charging and discharging. If the c + d + e is less than 0.1, it will be difficult to obtain the effects of the cycle characteristics and expansion and contraction behavior as described above, and if the c + d + e is more than 0.2, the amount of cobalt and manganese added is too high, so that the initial discharge capacity is significantly reduced, or it may be disadvantageous in terms of cost.

The positive electrode active material for lithium ion batteries may mostly be in the form of secondary particles in which a plurality of primary particles are aggregated, and partially be in the form containing primary particles that are not aggregated as secondary particles. The primary particles that form the secondary particles and the primary particles that are present alone may have various shapes such as substantially spherical shape, substantially elliptical shape, substantially plate shape, and substantially needle shape, although not particularly limited thereto. Further, the form in which a plurality of primary particles are aggregated is not particularly limited, and may be various forms such as a form in which a plurality of primary particles are aggregated in a random direction, or a form in which the secondary particles are radially aggregated in a substantially uniform fashion from the center to form a substantially spherical or substantially elliptical secondary particle.

The positive electrode active material for lithium ion batteries has the above formula (1) in which 0.0025 ≤ e / (b + c + d + e) ≤ 0.016, and M is at least one selected from Zr, Ta and W. That is, the positive electrode active material for lithium ion batteries contain at least one element selected from Zr, Ta and W. The solid solution of the element in the positive electrode active material exerts an effect of reducing the expansion/contraction behavior of the crystal lattice due to the insertion/extraction of lithium during charging and discharging. Therefore, when the compositional ratio of the element: e / (b + c + d + e) is 0.0025 or more, the cycle characteristics are improved. On the other hand, the element does not contribute to charge compensation during charging and discharging. Therefore, when the compositional ratio of the element: e / (b + c + d + e) is 0.016 or less, it exerts an effect of suppressing a decrease in discharge capacity. Moreover, it is preferably 0.003 ≤ e / (b + c + d + e) ≤ 0.012, and more preferably 0.003 ≤ e / (b + c + d + e) ≤ 0.008.

For the positive electrode active material for lithium ion batteries, WDX mapping analysis (Wave Length-dispersive X-ray mapping spectroscopy) in a field of view of 50 µm × 50 µm by FE-EPMA (Field Emission-Electron Probe micro Analysis) indicates that the oxide of M adheres to the surfaces of the positive electrode active material particles, and is not present as independent particles in which the oxide of M does not adhere to the surfaces of the positive electrode active material particles. According to such a configuration, even M (Zr, Ta and W), which is a small amount of different element (element different from Li, Ni, Co, and Mn, which are elements forming the positive electrode active material for lithium ion batteries) can efficiently provide good battery characteristics to the lithium ion battery. The WDX mapping analysis of the positive electrode active material particles in a field of view of 50 µm × 50 µm by FE-EPMA can be performed by stage scanning under conditions of an acceleration voltage of 15.0 kV and an irradiation current of 2.0 × 10⁻⁸ A.

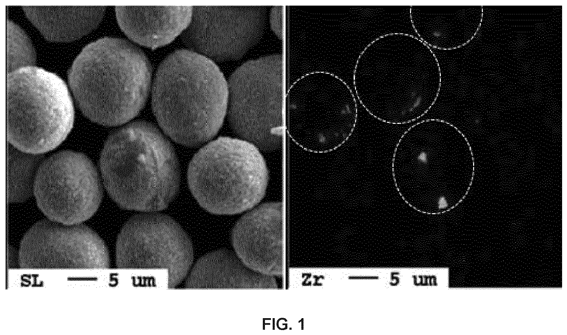

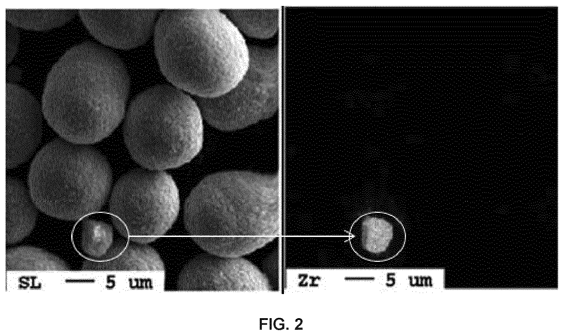

The left view of FIG. 1 is a SEM image of positive electrode active material particles by FE-EPMA showing an example of a state where "an oxide of M adheres to surfaces of the positive electrode active material particles, and the oxide of the M is not present as independent particles that do not adhere to the surfaces of the positive electrode active material particles" as described above. The right view of FIG. 1 is a WDX mapping image of Zr by FE-EPMA, which corresponds to the left view of FIG. 1. Further, the left view of FIG. 2 is a SEM image of positive electrode active material particles by FE-EPMA showing an example of a state where "an oxide of M is present as independent particles that do not adhere to the surfaces of the positive electrode active material particles". The right view of FIG. 2 is a WDX mapping image of Zr by FE-EPMA, which corresponds to the left view of FIG. 2. In the positive electrode active material particles of FIG. 1, according to the appearance observation, it is found that the oxide of M is present in the state where it adheres to the surfaces, and is not present as independent particles with respect to the positive electrode active material particles as in FIG. 2. It should be noted that FIG. 1 corresponds to the positive electrode active material particles according to Example 6, which will be described later, and FIG. 2 corresponds to the positive electrode active material particles according to Comparative Example 5, which will be described later.

The positive electrode active material for lithium ion batteries preferably has a 50% cumulative volume particle size D50 of 3 to 18 µm. Here, the 50% cumulative volume particle size D50 is a volume particle size at 50% accumulation in the cumulative particle size distribution curve on a volume basis. When the 50% cumulative volume particle size D50 of the positive electrode active material for lithium ion batteries is 3 µm or more, the specific surface area is suppressed, so that the coating amount of the oxide of Li and Nb can be suppressed. When the 50% cumulative volume particle size D50 of the positive electrode active material for lithium ion batteries is 18 µm or less, it is possible to suppress an excessive decrease in the specific surface area. The 50% cumulative volume particle size D50 of the positive electrode active material for lithium ion batteries is more preferably 3 to 15 µm, and even more preferably 3 to 10 µm, and even more preferably 3 to 8 µm. The 50% cumulative volume particle size D50 can be measured, for example, as follows. That is, first, 100 mg of the positive electrode active material powder is dispersed by irradiating it with 40 W ultrasonic wave for 60 seconds at a flow rate of 50% using a Microtrac laser diffraction particle size distribution analyzer "MT 3300 EX II", and the particle size distribution is then measured to obtain a cumulative particle size distribution curve on a volume basis. Subsequently, in the resulting cumulative particle size distribution curve, the volume particle size at 50% cumulative volume is defined as the 50% cumulative volume particle size D50 of the positive electrode active material powder. In addition, the water soluble solvent at the time of the measurement is passed through a filter, the solvent refractive index is 1.333, the particle permeability condition is set to "permeable", the particle refractive index is 1.81, the shape is aspheric, and the measurement range is 0.021 to 2000 µm, and the measurement time is 30 seconds.

### (Positive Active Material for All-Solid lithium Ion Batteries)

The positive electrode active material for all-solid lithium ion batteries according to an embodiment of the present invention includes the positive electrode active material for lithium ion batteries according to the embodiment of the present invention described above, and a coating layer made of an oxide of Li and Nb, which is provided on a positive electrode active material particle surface of the positive electrode active material for lithium ion batterie. The oxide of Li and Nb forming the coating layer may contain lithium niobate (LiNbOs) or may be LiNbO₃.

The content of Nb in the positive electrode active material for all-solid lithium ion batteries is preferably 0.5 to 0.8% by mass. The content of Nb of 0.5% by mass or more allows the entire surface of the active material to be coated, thereby suppressing an increase in resistance due to interfacial reaction between the solid electrolyte and the positive electrode active material when exposed to a high potential during charging. The content of Nb of 0.8% by mass or less leads to a thinner coating layer as much as possible, which will shorten the migration of Li ions in the coating layer during charging and discharging, and can reduce the diffusion migration resistance. More preferably, the content of Nb in the positive electrode active material for all-solid-state lithium ion batteries is 0.6 to 0.7% by mass.

The coating layer preferably has a thickness of 10 nm or less, and more preferably 6 nm or less. The thickness of the coating layer of 6 nm or less can more satisfactorily avoid adverse effects such as inhibition of movement of Li ions. The lower limit of the thickness of the coating layer is not particularly limited, but it may typically be 4 nm or more, and preferably 5 nm or more. The thickness of the coating layer can be measured by elemental mapping analysis and line analysis using a scanning transmission electron microscope (STEM).

### (Method for Producing Positive Electrode Active Material for Lithium Ion Batteries)

Next, a method for producing a positive electrode active material for lithium ion batteries according to an embodiment of the present invention will be described in detail. The method for producing the positive electrode active material for lithium ion batteries according to the embodiment of the present invention is started from preparing a precursor of the positive electrode active material for lithium ion batteries, the precursor having a composition represented by the following formula (2):

Ni_{b}Co_{c}Mn_{d}(OH)₂ (2)

in which formula (2), 0.8 ≤ b ≤ 0.9, 0.07 ≤ c ≤ 0.15, and b + c + d = 1.

A method for producing the precursor of the positive electrode active material for lithium ion batteries include, first, providing an aqueous solution containing: (a) a nickel salt; (b) a cobalt salt; (c) a manganese salt; and (d) a aqueous basic solution containing ammonia and a aqueous basis solution containing an alkali metal. The (a) nickel salt includes nickel sulfate, nickel nitrate, nickel hydrochloride, and the like. The (b) cobalt salt includes cobalt sulfate, cobalt nitrate, cobalt hydrochloride, and the like. The (c) manganese salt include manganese sulfate, manganese nitrate, manganese hydrochloride, and the like. The (d) aqueous basic solution containing ammonia include aqueous solutions such as an ammonia solution, and aqueous solutions of ammonium sulfate, ammonium carbonate, ammonium hydrochloride, and the like. The aqueous basic solution of the alkaline metal may be an aqueous solution of sodium hydroxide, potassium hydroxide, carbonate, or the like. Examples of the aqueous carbonate solution include an aqueous solution using a salt of a carbonate group, such as an aqueous sodium carbonate solution, an aqueous potassium carbonate solution, an aqueous sodium hydrogen carbonate solution, and an aqueous potassium hydrogen carbonate solution.

Further, the composition of the aqueous solution can be appropriately adjusted depending on the composition of the precursor to be produced, and the composition is preferably: (a) an aqueous solution containing 45 to 110 g/L of nickel ions; (b) an aqueous solution containing 4 to 20 g/L of cobalt ions; (c) an aqueous solution containing 1 to 4 g/L of manganese ions; (d) 10 to 28% by mass of aqueous ammonia; and an aqueous basic solution having an alkali metal concentration of 10 to 30% by mass.

Subsequently, the aqueous solution containing: (a) the nickel salt; (b) the cobalt salt; (c) the manganese salt, and (d) the aqueous basic solution containing ammonia and the aqueous basic solution of the alkali metal is used as a reaction solution, and a coprecipitation reaction is carried out while controlling the pH of the reaction solution to 10.8 to 11.4, the ammonium ion concentration to 10 to 22 g/L, and the solution temperature to 55 to 65°C. In this case, from three tanks: a tank containing a mixed aqueous solution of the nickel salt, the cobalt salt and the manganese salt, a tank containing the aqueous basic solution containing ammonia, and a tank containing the aqueous basic solution of the alkali metal, each of chemical solutions may be fed to a reaction vessel. The precursor of the positive electrode active material represented by the above formula (2) can be thus produced.

Subsequently, at least one selected from an oxide of Zr, an oxide of Ta, and an oxide of W having a 50% cumulative volume particle size D50 of 1 µm or less is mixed with the precursor of the positive electrode active material for lithium ion batteries by a wet process to obtain a mixture. The total amount of at least one selected from the oxide of Zr, the oxide of Ta and the oxide of W to be mixed can be appropriately adjusted depending on the target composition of the positive electrode active material for lithium ion batteries. As the oxide of Zr, ZrO₂ can be used, as the oxide of Ta, Ta₂O₅ can be used, and as the oxide of W, WO₂ or WO₃ can be used. In the mixing by the wet process, the precursor of the positive electrode active material for lithium ion batteries and at least one selected from the oxides of Zr, Ta and W are added to water medium, and mixed by a mechanical means to prepare a slurry. The slurry is then dried while leaving it to stand. The present invention requires that the slurry be dried in this static state (that is, dried while leaving it to stand). In contrast, a spray-drying method disperses the slurry by spraying it with high-pressure air from an atomizing nozzle. Therefore, some of the oxides such as ZrO₂, Ta₂O₅, WO₂ or WO₃ attached to the precursor in the slurry state are peeled off by the high pressure air. As a result, the oxides exist as independent particles. When the slurry is dried in a static state as in the present invention, it is only necessary to evaporate the water by heating, which prevents the oxide adhered during slurry mixing from peeling off.

Further, the slurry should be prepared so that the overall solid content of said slurry is a concentration of 40 to 60 mass%, preferably 50 mass%. Regardint the effect of oxides such as ZrO₂, Ta₂O₅, WO₂ or WO₃ on surface adhesion with respect to the concentration of solids in the slurry, in the case of low slurry concentration, the distance between particles during wet agitation and mixing is far and agglomeration (adhesion) between particles is difficult to occur, but in the case of high slurry concentration, the distance between particles is close and agglomeration (adhesion) between particles is likely to occur. Therefore, at low slurry concentrations, such as a slurry solids concentration of about 10 mass% for example, oxide particles such as ZrO₂, Ta₂O₅, WO₂ or WO₃ are not completely attached during wet stir mixing and are present as partially independent particles. On the other hand, when the solid concentration of the slurry is 40 to 60 mass%, as in the present invention, complete adhesion of oxide particles such as ZrO₂, Ta₂O₅, WO₂ or WO₃ takes place.

As described above, the precursor of the positive electrode active material for lithium ion batteries is mixed in the wet process with the oxide of Zr, the oxide of Ta, and the oxide of W, and prepare slurry with controlled solids concentration and leave it stand to dry, before mixing with the lithium source, thereby improving a rate of adhesion of oxides of different elements (Zr, Ta, W) to the surface of the precursor of the positive electrode active material for lithium ion batteries. Further, the control of the D50 of the particles of the oxide of Zr, the oxide of Ta and the oxide of W oxide to be mixed to 1 µm or less improve a rate of adhesion of the oxides of different elements (Zr, Ta, W) to the precursor of the positive electrodes for lithium ion batteries. The improvement of the rate of adhesion of the different elements (Zr, Ta, W) to the surface of the precursor of the positive electrode active material for lithium ion batteries can prevent the oxides of the different elements (Zr, Ta, W) form being present as independent particles without adhering to the surfaces of the positive electrode active material particles for lithium ion batteries. The D50 of the particles of the oxide of Zr, the oxide of Ta and the oxide of W to be mixed is preferably 0.3 to 1.0 µm, and more preferably 0.3 to 0.5 µm.

A lithium source is then mixed with the mixture of the precursor of the positive electrode active material for lithium ion batteries obtained as described above and at least one of the oxide of Zr, the oxide of Ta and the oxide of W in a dry process to form a lithium mixture. The amount of the lithium source to be mixed can be appropriately adjusted depending on the target composition of the positive electrode active material for lithium ion batteries. The lithium source includes lithium hydroxide. For the mixing method, the mixing ratio of each raw material is adjusted, and dry mixing is performed using a Henschel mixer, an automatic mortar, a V-shaped mixer, or the like.

The lithium mixture obtained as described above is then fired at 700 °C or more for 4 hours or longer. The firing of the lithium mixture is thus performed at once at a temperature of 700 °C or more for a long period of time of 4 hours or more, thereby improving a solid solution rate of the different elements (Zr, Ta, W) in the inside of the positive electrode active material for lithium ion batteries. Further, this can prevent the oxides of the different elements (Zr, Ta, W) from being present as independent particles without adhering to the surfaces of the positive electrode active material particles for lithium ion batteries. The firing temperature is preferably 700 to 800 °C, and the firing time is preferably 4 to 12 hours. The firing atmosphere is preferably an oxygen atmosphere.

Subsequently, if necessary, the fired body can be pulverized using, for example, a pulverizer to obtain powder of the positive electrode active material for lithium ion batteries.

### (Method for Producing Positive Electrode Active Material for All-Solid Lithium Ion Batteries)

The method for producing the positive electrode active material for all-solid lithium ion batteries according to an embodiment of the present invention includes, first, coating the positive electrode active material particle surface of the positive electrode active material for lithium ion batteries produced by the method for producing the positive electrode active material for lithium ion batteries as described above with an aqueous solution (coating liquid) containing Li and Nb. At this time, examples of the coating liquid include an aqueous peroxo complex solution and an aqueous oxalic acid solution of lithium niobate (LiNbOs). Further, the coating method is not particularly limited as long as it allows the solution to adhere to the surface of the positive electrode active material, and for example, it may employ a method using a coating device having a tumbling fluidized bed or a method using spray drying.

### (Positive Electrode for Lithium Ion Batteries and Lithium Ion Battery)

The positive electrode for lithium ion batteries according to an embodiment of the present invention has a structure in which a positive electrode mixture is provided on one side or both sides of a collector, the positive electrode mixture being prepared by mixing, for example, the positive electrode active material for lithium ion batteries having the above composition, a conductive aid, and a binder. Further, the lithium ion battery according to the embodiment of the present invention includes the lithium ion battery positive electrode having such a structure and a known lithium ion battery negative electrode.

Examples of the conductive aid include metallic conductive aids (aluminum, stainless steel (SUS), silver, gold, copper, titanium, etc.), carbon-based conductive aids (graphite and carbon black (acetylene black, Ketjen black, furnace black, channel black and thermal lamp black), and mixtures thereof. These conductive aids may be used alone or in combination of two or more. Moreover, they may be used as alloys or metal oxides. Among them, from the viewpoint of electrical stability, aluminum, stainless steel, silver, gold, copper, titanium, carbon-based conductive aids and mixtures thereof are more preferable, and silver, gold, aluminum, stainless steel and carbon-based conductive aids are more preferable, and the carbon-based conductive aids are particularly preferable. These conductive aids may be those obtained by coating a conductive material (preferably, among the conductive aids described above, the metal) around a particulate ceramic material or a resin material by plating or the like. The shape (form) of the conductive aid is not limited to the particle form, and may be in a form other than the particle form, such as carbon nanofibers, carbon nanotubes, etc., which are practically used as so-called filler-type conductive aids.

Examples of binders include substances commonly used in positive electrode mixtures for lithium ion batteries, and preferably copolymers having a structure derived from vinylidene fluoride or polyvinylidene fluoride (PVDF), and copolymers or homopolymers having a structure derived from tetrafluoroethylene (TEF), and copolymers or homopolymers having a structure derived from hexafluoropropylene (HFP). Specific examples include PVDF-HFP, PVDF-HFP-TEF, PVDF-TEF and TEF-HFP.

The positive electrode mixture is prepared by mixing the positive electrode active material for lithium ion batteries, the conductive agent, and the binder in a solvent to form a positive electrode mixture slurry, which is applied to one or both sides of a current collector, and then dried, thereby providing the positive electrode mixture on the current collector to form a positive electrode active material layer.

A solvent for the positive electrode mixture slurry may employ a known organic solvent such as a hydrocarbon organic solvent, an amide compound, a lactam compound, a urea compound, an organic sulfur compound, a cyclic organic phosphorus compound, or the like, as a single solvent or a mixed solvent. The hydrocarbon organic solvent that can be used herein includes saturated hydrocarbons, unsaturated hydrocarbons or aromatic hydrocarbons. The saturated hydrocarbons include hexane, pentane, 2-ethylhexane, heptane, decane, cyclohexane and the like. The unsaturated hydrocarbons include hexene, heptene, cyclohexene, and the like. The aromatic hydrocarbons include toluene, xylene, decalin, 1,2,3,4-tetrahydronaphthalene and the like. Among these, toluene and xylene are particularly preferred.

Materials making up the current collector include metallic materials such as copper, aluminum, titanium, stainless steel, nickel, and alloys thereof, as well as calcined carbon, conductive polymer materials, conductive glass, and the like. Among them, aluminum is more preferable from the viewpoint of weight reduction, corrosion resistance, and high conductivity. Moreover, the current collector is preferably a resin current collector made of a conductive polymer material. The shape of the current collector is not particularly limited, and it may be a sheet-shaped current collector made of the above material or a deposited layer comprised of fine particles made of the above material. Although the thickness of the current collector is not particularly limited, it is preferably 50 to 500 µm. Examples of the conductive polymer material making up the resin current collector that can be used herein may include a conductive polymer or a resin obtained by optionally adding a conductive agent to the resin.

From the viewpoint of battery performance, the thickness of the positive electrode for lithium ion batteries is preferably 150 to 600 µm, and more preferably 200 to 450 µm.

The lithium ion battery using the positive electrode for lithium ion batteries is obtained by combining a negative electrode that will be a counter electrode, housing it together with a separator in a cell container, injecting an electrolytic solution, and sealing the cell container. Further, the lithium ion battery is also obtained by preparing a bipolar electrode by forming a positive electrode on one side of the current collector and forming a negative electrode on the other side; laminating the bipolar electrode onto the separator and housing the cell container, injecting the electrolyte, and sealing the cell container.

Examples of the negative electrode include those containing a negative electrode active material, a conductive aid, a current collector, and the like. The negative electrode active material may employ known negative electrode active materials for lithium ion batteries, including carbon-based materials (graphite, hardly graphitizable carbon, amorphous carbon, resin fired bodies (for example, those obtained by firing the phenolic resin, furan resin, and the like to carbonize them); cokes (for example, pitch cokes, needle cokes, petroleum cokes, etc.) and carbon fibers, etc.); silicon-based materials (silicon, silicon oxide (SiOₓ), silicon-carbon composites (those obtained by coating the surfaces of carbon particles with silicon and/or silicon carbide; those obtained by coating the surfaces of silicon particles or silicon oxide particles with carbon and/or silicon carbide; and silicon carbide, etc.); and silicon alloys (silicon-aluminum alloys, silicon-lithium alloys, silicon-nickel alloys, silicon-iron alloys, silicon-titanium alloys, silicon-manganese alloys, silicon-copper alloys, silicon-tin alloys, etc.); conductive polymers (for example, polyacetylene and polypyrrole, etc.); metals (tin, aluminum, zirconium and titanium, etc.); metal oxides (titanium oxides and lithium-titanium oxides, etc.); and metal alloys (for example, lithium-tin alloys, lithium-aluminum alloys, lithium-aluminum-manganese alloys, etc.), etc.; and mixture of these with the carbon-based materials, and the like. Further, as the conductive aid, the conductive aid identical or equivalent to that of the positive electrode as described above can be suitably used.

Examples of the current collector include those identical or equivalent to the current collector that forms the positive electrode described above, and copper is preferable from the viewpoint of weight reduction, corrosion resistance, and high conductivity. Moreover, it may be a resin current collector, which may suitably use the current collector identical or equivalent to that forms the positive electrode as described above. Although the thickness of the current collector is not particularly limited, it is preferably 10 to 60 µm.

The separators include known separators for lithium ion batteries such as porous films made of polyethylene or polypropylene; laminated films of porous polyethylene film and porous polypropylene; non-woven fabrics made of synthetic fibers (polyester fibers, aramid fibers, etc.) or glass fibers; and those obtained by attaching ceramic fine particles such as silica, alumina, and titania on their surfaces.

### (Positive Electrode for All-Solid Lithium Ion Batteries and All-Solid Lithium Ion Battery)

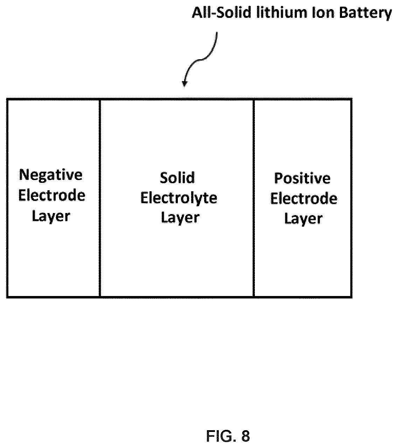

An all-solid lithium ion battery including a positive electrode layer, a solid electrolyte layer, and a negative electrode layer can be prepared by forming the positive electrode from the positive electrode active material for all-solid lithium ion batteries according to an embodiment of the present invention, and using the positive electrode as that positive electrode layer. The solid electrolyte layer and the negative electrode layer that form the all-solid lithium ion battery according to the embodiment of the present invention are not particularly limited, and can be formed of known materials, and can have known structures as shown in FIG. 8.

The positive electrode layer of the all-solid lithium ion batteries may be obtained by forming a layered positive electrode mixture obtained by mixing the positive electrode active material for the all-solid lithium ion batteries according to the embodiment of the present invention with a solid electrolyte. The content of the positive electrode active material in the positive electrode layer is, for example, preferably 50% by mass or more and 99% by mass or less, and more preferably 60% by mass or more and 90% by mass or less.

The positive electrode mixture may further contain a conductive aid. The conductive aid that can be used herein includes carbon materials, metal materials, or a mixture thereof. The conductive aid may contain, for example, at least one element selected from the group consisting of carbon, nickel, copper, aluminum, indium, silver, cobalt, magnesium, lithium, chromium, gold, ruthenium, platinum, beryllium, iridium, molybdenum, niobium, osmium, rhodium, tungsten and zinc. The conductive aid is preferably a metal simple substance, mixture or compound containing a highly conductive carbon single substance, carbon, nickel, copper, silver, cobalt, magnesium, lithium, ruthenium, gold, platinum, niobium, osmium or rhodium. Examples of the carbon material that can be used herein include carbon black such as Ketjen black, acetylene black, DENKA BLACK, thermal black and channel black; graphite; carbon fiber; activated carbon; and the like.

The average thickness of the positive electrode layer of the all-solid lithium ion battery is not particularly limited, and it can be appropriately designed according to the purpose. The average thickness of the positive electrode layer of the all-solid lithium ion battery may be, for example, 1 µm to 100 µm, or may be 1 µm to 10 µm.

The method for forming the positive electrode layer of the all-solid lithium ion battery is not particularly limited, and it can be appropriately selected according to the purpose. Examples of the method for forming the positive electrode layer of the all-solid lithium ion battery include a method of compression-molding the positive electrode active material for all-solid lithium ion batteries, and the like.

The negative electrode layer of the all-solid lithium ion battery may be obtained by forming a known negative electrode active material for all-solid lithium ion batteries in a form of a layer. Further, the negative electrode layer may be obtained by forming a negative electrode mixture in a form of a layer, which is obtained by mixing the known negative electrode active material for all-solid lithium ion batteries with a solid electrolyte. The content of the negative electrode active material in the negative electrode layer is, for example, preferably 10% by mass or more and 99% by mass or less, and more preferably 20% by mass or more and 90% by mass or less.

The negative electrode layer may contain a conductive aid, as in the positive electrode layer. The same materials as those described for the positive electrode layer can be used for the conductive aid. Examples of the negative electrode active material include carbon materials such as artificial graphite, graphite carbon fiber, resin baked carbon, pyrolytic vapor growth carbon, cokes, mesocarbon microbeads (MCMB), furfuryl alcohol resin baked carbon, polyacene, pitch-based carbon fiber, vapor-grown carbon fiber, natural graphite, hardly graphitizable carbon, etc., or a mixture thereof. Used as the negative electrode material may be, for example, a metal itself such as metallic lithium, metallic indium, metallic aluminum, and metallic silicon, or an alloy combined with other elements or compounds.

The average thickness of the negative electrode layer of the all-solid lithium ion battery is not particularly limited, and it can be appropriately selected depending on the purpose. The average thickness of the negative electrode layer of the all-solid lithium ion battery may be, for example, 1 µm to 100 µm, or 1 µm to 10 µm.

The method for forming the negative electrode layer of the all-solid lithium ion battery is not particularly limited, and it can be appropriately selected depending on the purpose. Examples of the method for forming the negative electrode layer of the all-solid lithium ion battery include, for example, a method of compression-molding negative electrode active material particles, a method of vapor-depositing a negative electrode active material, and the like.

The solid electrolyte may employ a known solid electrolyte for all-solid lithium ion batteries. As the solid electrolyte, an oxide-based solid electrolyte, a sulfide-based solid electrolyte, or the like can be used.

Examples of the oxide-based solid electrolyte include LiTi₂(PO₄)₃, Li₂O-B₂O₃-P₂O₅, Li₂O-SiO₂, Li₂O-B₂O₃, and Li₂O-B₂O₃-ZnO, and the like.

Examples of the sulfide-based solid electrolyte includes LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, Lil-Li₃PO₄-P₂S₅, Li₃PS₄, and Li₂S-P₂S₅, and the like.

Examples of the solid electrolyte using the lithium-containing compound including lithium and at least one element selected from niobium, tantalum, silicon, phosphorus and boron include LiNbOs , or Li₁.₃Al_{0.3}Ti_{0.7}(PO₄)₃, Li_{1+x+y}AₓTi₂₋ₓSi_{y}P_{3-y}O₁₂ in which A = Al or Ga, 0 ≤ x ≤ 0.4, 0 < y ≤ 0.6; [(B_{1/2}Li_{1/2})_{1-z}C_{z}]TiO₃ in which B = La, Pr, Nd, Sm, C = Sr or Ba, 0 ≤ x ≤ 0.5; Li₅La₃Ta₂O₁₂, Li₇La₃Zr₂O₁₂, Li₆BaLa₂Ta₂O₁₂, Li₃PO_{(4-3/2w)}N_{w}(w < 1), and Li_{3.6} Si_{0.6}P_{0.4}O₄,and the like, and LiI, LiI-Al₂ O₃, LiN₃, Li₃ N-LiI-LiOH, and the like.

The average thickness of the solid electrolyte layer of the all-solid lithium ion battery is not particularly limited, and it can be appropriately designed according to the purpose. The average thickness of the solid electrolyte layer of the all-solid lithium ion battery may be, for example, 50 µm to 500 µm, or 50 µm to 100 µm.

The method for forming the solid electrolyte layer of the all-solid lithium ion battery is not particularly limited, and it can be appropriately selected depending on the purpose. Examples of the method of forming the solid electrolyte layer of the all-solid lithium ion battery include sputtering using a solid electrolyte target material, and compression molding of the solid electrolyte, and the like.

Other members making up the all-solid lithium ion battery are not particularly limited, and they can be appropriately selected according to the purpose. Examples of the other members include a positive electrode current collector, a negative electrode current collector, and a battery case.

The size and structure of the positive electrode current collector are not particularly limited, and they can be appropriately selected according to the purpose.

Examples of materials for the positive electrode current collector include die steel, stainless steel, aluminum, aluminum alloys, titanium alloys, copper, gold, and nickel.

Examples of the shape of the positive electrode current collector include a foil shape, a plate shape, and a mesh shape.

The average thickness of the positive electrode current collector may be, for example, 10 µm to 500 µm, or 50 µm to 100 µm.

The size and structure of the negative electrode current collector are not particularly limited, and they can be appropriately selected according to the purpose.

Examples of materials for the negative electrode current collector include die steel, gold, indium, nickel, copper, stainless steel.

Examples of the shape of the negative electrode current collector include a foil shape, a plate shape, and a mesh shape.

The average thickness of the negative electrode current collector may be, for example, 10 µm to 500 µm, or 50 µm to 100 µm.

The battery case is not particularly limited, and it can be appropriately selected according to the purpose. Examples of the battery case include known laminate films that can be used for conventional all-solid batteries. Examples of laminate films include resin laminate films and films obtained by vapor-depositing metal on the resin laminate films.

The shape of the battery is not particularly limited, and it can be appropriately selected according to the purpose. Examples include cylindrical, square, button, coin, and flat types.

### EXAM PLES

The following examples are provided for better understanding of the invention and its advantages, but the invention is not limited to these examples.

### (Example 1)

First, a precursor of a positive electrode active material for lithium ion batteries represented by the compositional formula: Ni_{0.8}Co_{0.1}Mn_{0.1}(OH)₂ was prepared.

Then, to a water medium were added the precursor of the positive electrode active material for lithium ion batteries and ZrO₂ having a D50 of 0.35 µm so as to have a charged amount of 0.4 mol%, and these were mixed by mechanical means (wet mixing) to prepare a slurry. The slurry was prepared so that the overall solid content of the slurry was a concentration of 50 mass%. The slurry was then dried while leaving the slurry to stand to obtain a mixture.

Then, to the resulting mixture was added lithium hydroxide (lithium source) and mixed (dry mixing) by a Henschel mixer to form a lithium mixture.

Then, the lithium mixture obtained as described above was fired in an oxygen atmosphere at 800 °C for 4 hours to produce a positive electrode active material.

### (Examples 2 to 17, Comparative Examples 6 and 7)

Each positive electrode active material was prepared by the same method as that of Example 1, with the exception that the composition of the precursor of the positive electrode active material, the type of mixed oxides of the different elements, the particle size of the oxide of the different element, the charged amount of the oxide of the different element, the firing temperature and the firing time were the conditions as shown in Table 1.

### (Comparative Examples 1 to 4, 8 and 9)

Each positive electrode active material was prepared by the same method as that of Example 1, with the exception that the precursor of the positive electrode active material was not mixed with the oxide of the different element, and the composition and firing temperature of the precursor of the positive electrode active material were the conditions as shown in Table 1.

### (Comparative Example 5)

A positive electrode active material was prepared by the same method as that of Example 1, with the exception that the precursor of the positive electrode active material was mixed (dry-mixed) with the oxide of the different element using a Henschel mixer to prepare a mixture of the precursor of the positive electrode active material and the oxide of the different element, and the composition of the precursor of the positive electrode active material and the firing temperature were the conditions as shown in Table 1.

### (Example 18)

First, a precursor of a positive electrode active material for lithium ion batteries represented by the compositional formula: Ni_{0.82}Co_{0.15}Mn_{0.03}(OH)₂ was prepared.

Then, to a water medium were added the precursor of the positive electrode active material for lithium ion batteries and ZrO₂ having a D50 of 0.35 µmt so as to have a charged amount of 0.3 mol%, and these were mixed by a mechanical means (wet-mixed) to prepare a slurry. The slurry was prepared so that the overall solid content of the slurry was a concentration of 50 mass%. The slurry was then dried while leaving the slurry to stand to obtain a mixture.

Then, to the resulting mixture was added lithium hydroxide (lithium source) and mixed (dry-mixed) by a Henschel mixer to form a lithium mixture.

Then, the lithium mixture obtained as described above was fired in an oxygen atmosphere at 720°C for 12 hours to prepare a positive electrode active material.

Then, an aqueous LiNbOs peroxo complex solution having a Nb content of 0.20 mol/L was prepared as a coating liquid, and an oxide precursor containing Li and Nb was coated on the surface of the prepared positive electrode active material using a tumbling fluidized bed coating apparatus, and heat-treated in an oxygen atmosphere at 250°C to prepare a positive electrode active material having a coating layer of LiNbOs on the surface.

### (Example 19)

A positive electrode active material provided with a coating layer of LiNbOs on the surface was prepared by the same method as that of Example 18, with the exception that to a water medium were added the precursor of the positive electrode active material for lithium ion batteries and WO₂ having a D50 of 0.56 µm so as to have a charged amount of 0.5 mol %, and these were mixed by a mechanical means (wet-mixed) to prepare the slurry.

### (Example 20)

A positive electrode active material provided with a coating layer of LiNbOs on the surface was prepared by the same method as that of Example 18, with the exception that to a water medium were added the precursor of the positive electrode active material for lithium ion batteries and Ta₂O₅ having a D50 of 0.31 µm so as to have a charged amount of 0.5 mol %, and these were mixed by a mechanical means (wet-mixed) to prepare the slurry.

### (Comparative Example 10)

The surface of the positive electrode active material prepared under the same conditions as those of Comparative Example 2 was coated with an aqueous LiNbOs solution as a coating liquid using a tumbling fluidized bed coating apparatus at a heat treatment temperature of 250°C in an oxygen atmosphere to prepare a positive electrode active material having a coating layer of LiNbOs on its surface.

### (Composition of Positive Electrode Active Material)

0.2 g of a sample (powder) of each positive electrode active material obtained was weighed, and decomposed by an alkali fusion method, and then subjected to compositional analysis using an inductively coupled plasma emission spectrometer (ICP-OES) "PS 7800" from Hitachi High-Tech Corporation.

The oxygen content was determined by subtracting the impurity concentration and the amount of residual alkali in addition to the analytical values of Li and metal components from the total amount of the analytical sample.

### (50% Cumulative Volume particle size D50)

100 mg of a sample (powder) of each positive electrode active material obtained was dispersed by irradiating the sample with an ultrasonic wave of 40 W for 60 seconds at a flow rate of 50% using a Microtrac laser diffraction particle size distribution analyzer "MT 3300 EXII", and the particle size distribution was then measured to obtain a cumulative particle size distribution curve on a volume basis. Subsequently, in the obtained cumulative particle size distribution curve, the volume particle size at 50% cumulative volume was defined as the 50% cumulative volume particle size D50 of the positive electrode active material powder. In addition, the water soluble solvent at the time of measurement was passed through a filter, the solvent refractive index was 1.333, the particle permeability condition was set to "permeable", the particle refractive index was 1.81, the shape was an aspheric shape, and the measurement range was 0.021 to 2000 µm, and the measurement time was 30 seconds.

### (WDX Mapping Analysis by FE-EPMA)

Using a field emission electron probe microanalyzer (FE-EPMA) "JXA-8500F" from JEOL Ltd., the WDX mapping analysis was carried out by stage scanning under conditions of a field area at magnifications: 50 µm × 50 µm, and at an acceleration voltage of 15.0 kV, an irradiation current of 2.0 × 10⁻⁸ A. For the measurement sample, about 0.3 g of the sample (powder) of each positive electrode active material obtained was sprinkled on a carbon tape attached on a stage holder, and the stage holder was then introduced into the apparatus and measurement was carried out.

In the WDX mapping analysis, the sample in which the oxide of M adhered to the surfaces of the positive electrode active material particles was indicated as "A" in Table 2, and the sample in which the oxide of M did not adhere to the surfaces of the positive electrode active material particles was indicated as "B" in Table 2.

Further, in the WDX mapping analysis, the sample in which the oxide of M was not present as independent particles that did not adhere to the surfaces of the positive electrode active material particles was indicated as "A" in Table 2, and the sample in which the oxide of M was present as independent particles that did not adhere to the surfaces of the positive electrode active material particles was indicated as "B" in Table 2.

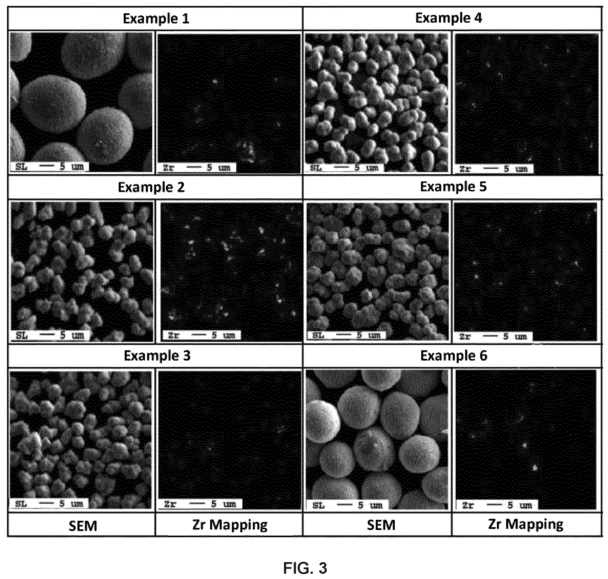

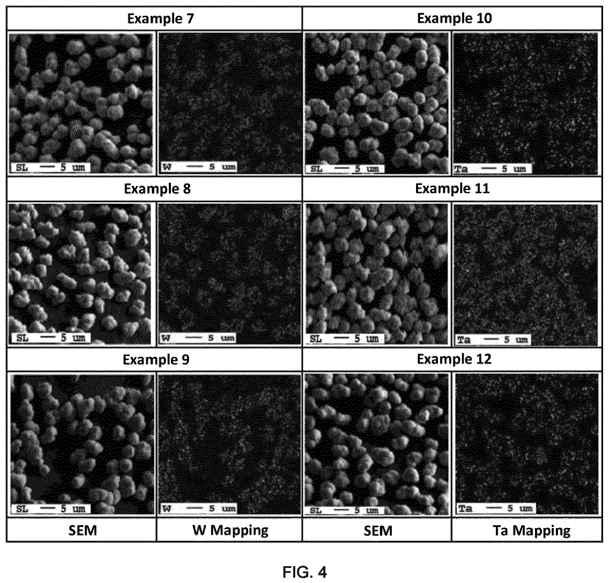

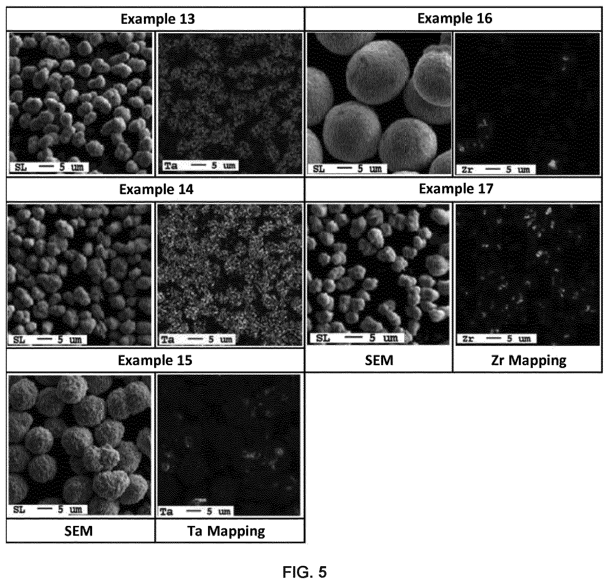

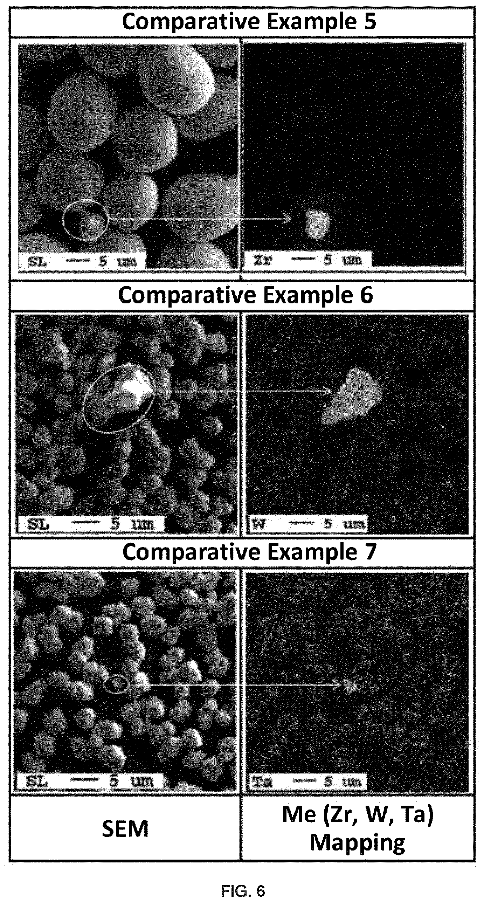

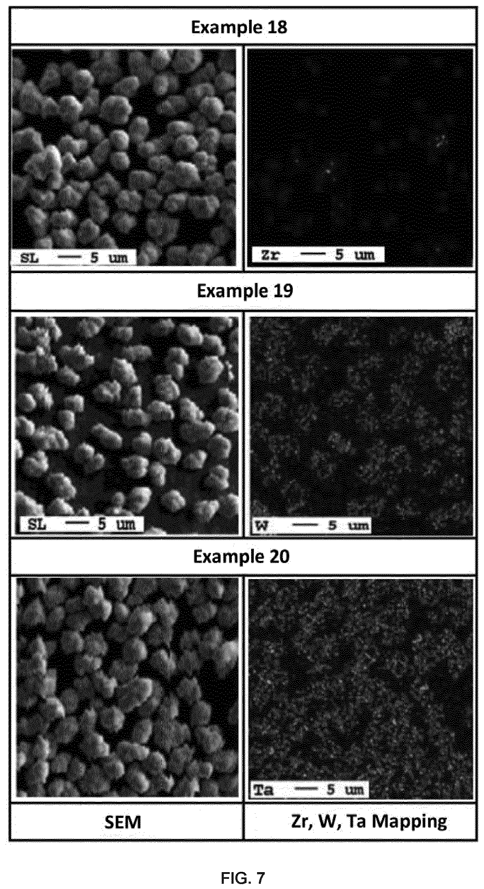

Further, SEM images of the positive electrode active material particles of Examples 1 to 17 and Comparative Examples 5 to 7 by FE-EPMA and WDX mapping images of Zr, Ta or W by FE-EPMA corresponding to the SEM images are shown in FIG. 3 (Examples 1 to 6), FIG. 4 (Examples 7 to 12), FIG. 5 (Examples 13 to 17), FIG. 6 (Comparative Examples 5 to 7), and FIG. 7 (Examples 18 to 20). FIG. 7 (Examples 18 to 20) shows WDX mapping images of the positive electrode active material particles in an uncoated state. For Comparative Examples 1 to 4 and 8 to 10, they were samples that were not doped with Zr, Ta, or W, and so SEM images and WDX mapping images of the positive electrode active material particles were not obtained.

### (Battery Characteristics: Examples 1 to 17, Comparative Examples 1 to 9)

### <Initial Discharge Capacity, 20 Cycle Capacity Retention Rate>

The positive electrode active material, the conductive aid, and the binder were weighed at a ratio of 90:5:5 mol%. Subsequently, a binder dissolved in an organic solvent (N-methylpyrrolidone) was mixed with the positive electrode active material and the conductive aid to form a slurry, which was coated onto an Al foil, dried, and pressed to form a positive electrode. Subsequently, a 2032-type coin cell for evaluation in which Li was the counter electrode was prepared, and using 1M-LiPF₆ dissolved in EC-DMC (1:1) as the electrolyte, the initial capacity obtained by the discharge rate of 0.1C (25 °C, a charge upper limit voltage: 4.3 V, a discharge lower limit voltage: 3.0 V), and 55 °C high temperature cycle characteristics after 20 cycles at a charge/discharge rate of 1 C were measured to calculate 20 cycle capacity retention rate (%).

### <DC Resistance>

In the above coin cell evaluation, the voltage change ΔV after 2 seconds from the start of discharge was divided by the current value to calculate the initial DC resistance and the DC resistance after 20 cycles, and the resistance increase rate (%) after 20 cycles was calculated by the equation: ((DC resistance after 20 cycles - initial DC resistance) / (initial DC resistance)) × 100 [%].

### (Battery Characteristics: Examples 18 to 20, Comparative Example 10)

### <Method for Producing All-Solid Battery>

The positive electrode active material obtained in each of Examples 18 to 20 and Comparative Example 10, the sulfide-based solid electrolyte (75Li₂S-25P₂S₅), acetylene black, and the binder were mixed in this order at a mass ratio of 60:35:5:1.5, and anisole was added as a solvent so that the solid content of the slurry was 65% by mass, and mixed for 400 seconds by Mazerustar to form a positive electrode mixture slurry, which was applied onto a surface of an aluminum foil having a thickness of 0.03 mm, a positive electrode current collector. In this case, an applicator with a gap of 400 µm was used and moved at a moving speed of 15 mm/s to coat the positive electrode mixture slurry onto the surface of the positive electrode current collector.

The positive electrode current collector coated with the positive electrode mixture slurry was then dried on a hot plate at 100 °C for 30 minutes to remove the solvent, thereby forming a positive electrode mixture layer on the surface of the positive electrode current collector.

The above positive electrode mixture layer was then placed on a sulfide-based solid electrolyte having the same composition as the sulfide-based solid electrolyte used in production of the positive electrode mixture layer, and pressed at 333 MPa to form a laminate of solid electrolyte layer/positive electrode mixture layer/positive electrode current collector.

Subsequently, a metal Li-In alloy was pressure-bonded to the negative electrode side of the solid electrolyte layer at 37 MPa to form a negative electrode layer. The laminate thus produced was placed in a battery test cell made of SUS304, and a confining pressure was applied to obtain an all-solid secondary battery. Further, the all-solid secondary battery obtained by applying the confining pressure was placed in a sealed container to shut off the atmosphere.

### <Evaluation of Discharge Capacity>

For the discharge capacity of the all-solid battery, the impedance was measured after the initial charge at 0.1C at 55°C to determine the resistance, and then discharged at 0.1C to evaluate the initial discharge capacity.

### <Evaluation of Resistance>

The resistance of the all-solid battery was evaluated as the resistance after the first charge by performing AC impedance measurement from 0.1 Hz to 1 MHz and analyzing the resulting Cole-Cole plot.

### <Evaluation of Rate Characteristics>

The rate characteristics (%) of the all-solid lithium ion battery were evaluated by measuring the initial capacity obtained at a discharge rate of 0.1 C (55 °C, upper limit charge voltage: 3.7 V, lower limit discharge voltage: 2.5 V vs Li-In), and then measuring the high rate capacity obtained at a discharge rate of 0.5 C (55 °C, upper limit charge voltage: 3.7 V, lower limit discharge voltage: 2.5 V vs Li-In), and calculating a ratio: (high rate capacity) / (initial capacity) as a percentage.

### <Evaluation of Capacity Retention Rate>

The capacity retention rate of the all-solid lithium ion battery was evaluated as the 20 cycle capacity retention rate by dividing the discharge capacity after 20 cycles by the initial discharge capacity obtained at 55°C with a discharge current of 0.5C.

The above production conditions and test results are shown in Tables 1-4.

**[Table 1]**

| | Precursor Composition (mol%) | | | Particle Size D50 (µm) | Oxide of Different Element | Different Element Particle Size D50 (µm) | Charged Amount of Different Element (mol%) | Different Element Adding Method | Firing Temperature (°C) | Firing Time (h) |
|---|---|---|---|---|---|---|---|---|---|---|
| | Ni | Co | Mn | | | | | | | |
| Example 1 | 80 | 10 | 10 | 17.4 | Zro2 | 0.35 | 0.4 | Wet | 800 | 4 |
| Example 2 | 82 | 15 | 3 | 5.4 | ZrO2 | 0.35 | 1.6 | Wet | 740 | 4 |
| Example 3 | 82 | 15 | 3 | 5.3 | ZrO2 | 0.35 | 0.3 | Wet | 720 | 12 |
| Example 4 | 82 | 15 | 3 | 5.3 | ZrO2 | 0.35 | 0.5 | Wet | 720 | 12 |
| Example 5 | 82 | 15 | 3 | 5.3 | ZrO2 | 0.35 | 0.7 | Wet | 720 | 12 |
| Example 6 | 82 | 15 | 3 | 14.9 | ZrO2 | 0.36 | 1.2 | Wet | 740 | 4 |
| Example 7 | 82 | 15 | 3 | 5.5 | WO3 | 0.3 | 0.5 | Wet | 760 | 4 |
| Example 8 | 82 | 15 | 3 | 5.4 | WO3 | 0.3 | 0.5 | Wet | 720 | 12 |
| Example 9 | 82 | 15 | 3 | 5.4 | WO2 | 0.56 | 0.5 | Wet | 720 | 12 |
| Example 10 | 82 | 15 | 3 | 5.4 | Ta2O5 | 0.32 | 0.15 | Wet | 720 | 12 |
| Example 11 | 82 | 15 | 3 | 5.4 | Ta2O5 | 0.31 | 0.25 | Wet | 720 | 12 |
| Example 12 | 82 | 15 | 3 | 5.4 | Ta2O5 | 0.32 | 0.35 | Wet | 720 | 12 |
| Example 13 | 82 | 15 | 3 | 5.4 | Ta2O5 | 0.31 | 0.5 | Wet | 720 | 12 |
| Example 14 | 82 | 15 | 3 | 5.4 | Ta2O5 | 0.3 | 0.75 | Wet | 720 | 12 |
| Example 15 | 82 | 15 | 3 | 10.7 | Ta2O5 | 0.5 | 0.5 | Wet | 800 | 4 |
| Example 16 | 85 | 7.5 | 7.5 | 18.4 | ZrO2 | 0.35 | 0.4 | Wet | 760 | 4 |
| Example 17 | 90 | 7 | 3 | 5.6 | ZrO2 | 0.35 | 1.6 | Wet | 720 | 4 |
| Comp. 1 | 80 | 10 | 10 | 17.1 | - | - | - | - | 800 | 4 |
| Comp. 2 | 82 | 15 | 3 | 5.5 | - | - | - | - | 720 | 4 |
| Comp. 3 | 82 | 15 | 3 | 10.3 | - | - | - | - | 720 | 4 |
| Comp. 4 | 82 | 15 | 3 | 14.9 | - | - | - | - | 740 | 4 |
| Comp. 5 | 82 | 15 | 3 | 15 | ZrO2 | 5 | 1.2 | Dry | 740 | 4 |
| Comp. 6 | 82 | 15 | 3 | 5.4 | WO3 | 21 | 0.5 | Wet | 720 | 4 |
| Comp. 7 | 82 | 15 | 3 | 5.4 | Ta2O5 | 2.3 | 0.5 | Wet | 720 | 4 |
| Comp. 8 | 85 | 7.5 | 7.5 | 18.4 | - | - | - | - | 760 | 4 |
| Comp. 9 | 90 | 7 | 3 | 5.6 | - | - | - | - | 720 | 4 |

**Table 2**

| | Positive Electrode Active Material: LiₐNi_{b}Co_{c}Mn_{d}MₐO_{f} Composition | | | | | | | WDX Mapping Analysis | | Initial Discharge Capacity (mAh/g) | 20 Cycle Capacity Retention Rate (%) | Initial DC Resistance (Ω) | DC Resistance after 20 Cycles (Ω) | Resistance Increase Rate after 20 Cycles (%) |
|---|---|---|---|---|---|---|---|---|---|---|---|---|---|---|
| | Ni (mol%) | Co (mol%) | Mn (mol%) | Zr (mol%) | Ta (mol%) | W (mol%) | Li/Me Ratio | Oxide of M adheres to surface of positive electrode active material particles | Oxide of M is not present as independent particles not adhering to surface of positive electrode active material particles | | | | | |
| Example 1 | 80.00 | 9.77 | 9.86 | 0.38 | - | - | 1.01 | A | A | 195 | 95.6 | 15 | 26 | 78 |
| Example 2 | 81.15 | 14.51 | 2.86 | 1.48 | - | - | 1.00 | A | A | 210 | 96.5 | 11 | 13 | 23 |
| Example 3 | 82.04 | 14.75 | 2.89 | 0.32 | - | - | 1.03 | A | A | 214 | 97.7 | 8 | 10 | 21 |
| Example 4 | 81.81 | 14.83 | 2.88 | 0.48 | - | - | 1.02 | A | A | 213 | 97.1 | 9 | 13 | 43 |
| Example 5 | 81.62 | 14.81 | 2.90 | 0.67 | - | - | 1.03 | A | A | 212 | 97.6 | 9 | 11 | 29 |
| Example 6 | 81.38 | 14.63 | 2.87 | 1.12 | - | - | 1.02 | A | A | 202 | 97.7 | 13 | 18 | 33 |
| Example 7 | 81.82 | 14.83 | 2.88 | - | - | 0.47 | 1.02 | A | A | 216 | 96.2 | 14 | 23 | 65 |
| Example 8 | 81.83 | 14.83 | 2.89 | - | - | 0.46 | 1.02 | A | A | 213 | 97.4 | 12 | 18 | 53 |
| Example 9 | 81.85 | 14.87 | 2.86 | - | - | 0.42 | 1.03 | A | A | 213 | 97.4 | 12 | 18 | 53 |
| Example 10 | 82.04 | 14.78 | 2.90 | - | 0.28 | - | 1.02 | A | A | 214 | 96.8 | 13 | 19 | 49 |
| Example 11 | 81.82 | 14.83 | 2.88 | - | 0.47 | - | 1.03 | A | A | 210 | 96.7 | 14 | 22 | 60 |
| Example12 | 81.74 | 14.73 | 2.88 | - | 0.65 | - | 1.02 | A | A | 209 | 96.6 | 13 | 20 | 55 |
| Example 13 | 81.44 | 14.76 | 2.87 | - | 0.93 | - | 1.03 | A | A | 209 | 97.0 | 13 | 19 | 46 |
| Example 14 | 81.16 | 14.60 | 2.85 | - | 1.40 | - | 1.02 | A | A | 204 | 96.8 | 17 | 27 | 57 |
| Example 15 | 81.30 | 14.84 | 2.91 | | 0.95 | - | 1.03 | A | A | 203 | 97.8 | 7 | 12 | 64 |
| Example 16 | 84.70 | 7.42 | 7.52 | 0.36 | - | - | 1.01 | A | A | 204 | 96.7 | 17 | 26 | 51 |
| Example 17 | 88.44 | 6.99 | 3.05 | 1.52 | - | - | 1.03 | A | A | 220 | 96.1 | 15 | 27 | 82 |
| Comp. 1 | 80.10 | 9.90 | 10.00 | - | - | - | 1.01 | B | A | 198 | 93.2 | 20 | 46 | 130 |
| Comp. 2 | 82.10 | 14.90 | 3.00 | - | - | - | 1.01 | B | A | 212 | 94.2 | 17 | 64 | 273 |
| Comp. 3 | 82.00 | 14.90 | 3.10 | - | - | - | 1.00 | B | A | 208 | 94.8 | 16 | 37 | 140 |
| Comp. 4 | 81.90 | 15.10 | 3.00 | - | - | - | 1.01 | B | A | 206 | 94.2 | 14 | 44 | 216 |
| Comp. 5 | 81.20 | 14.88 | 2.94 | 0.98 | - | - | 1.01 | B | B | 200 | 94.9 | 21 | 42 | 100 |
| Comp. 6 | 81.76 | 14.84 | 2.99 | - | - | 0.41 | 1.02 | A | B | 214 | 93.4 | 14 | 32 | 119 |
| Comp. 7 | 81.66 | 15.04 | 2.89 | - | 0.42 | - | 1.02 | A | B | 212 | 93.9 | 12 | 26 | 108 |
| Comp. 8 | 85.10 | 7.40 | 7.50 | - | - | - | 1.01 | B | A | 207 | 93.4 | 13 | 38 | 201 |
| Comp. 9 | 90.00 | 6.90 | 3.10 | - | - | - | 1.03 | B | A | 223 | 93.2 | 18 | 57 | 222 |

**[Table 3]**

| | Precursor Composition (mol%) | | | particle Size D50 (µm) | Oxide of Different Element | Different Element Particle Size D50 (µm) | Charged Amount of Different Element (mol%) | Different Element Adding Method | Firing Temperature (°C) | Firing Time (h) | Surface Treatment Conditions | Heat Treatment Temperature (°C) |
|---|---|---|---|---|---|---|---|---|---|---|---|---|
| | Ni | Co | Mn | | | | | | | | | |
| Example 18 | 82 | 15 | 3 | 5.4 | ZrO2 | 0.35 | 0.3 | Wet | 720 | 12 | Rolling Fluidized Bed Coating Coating Liquid: LiNbO3Aqueous Solution | 250 |
| Example 19 | 82 | 15 | 3 | 5.4 | WO2 | 0.56 | 0.5 | Wet | 720 | 12 | Rolling Fluidized Bad Coating Coating Liquid: LiNbO3Aqueous Solution | 260 |
| Example 20 | 82 | 15 | a | 5.4 | Ta2O5 | 0.31 | 0.5 | Wet | 720 | 12 | Rolling Fluidized Bed Coating Coating Liquid: LiNbO3Aqueous Solution | 250 |
| Comp. 10 | 82 | 15 | 3 | 5.5 | - | - | - | - | 720 | 4 | Rolling Fluidized Bed Coating Coating Liquid: LiNbO3Aqueous Solution | 250 |

**Table 4**

| | Positive Electrode Active Material: Composition | | | | | | | | WDX Mapping Analysis | | Initial Discharg e Capacity (mAh/g) | Rate Characteristics (0.5C/0.1C) (%) | 20 Cycle Capacity Retention Rate (%) | Resistance after Initial Charge (Ω) |
|---|---|---|---|---|---|---|---|---|---|---|---|---|---|---|
| | Ni (mol%) | Co (mol%) | Mn (mol%) | Zr (mol%) | Ta (mol%) | W (mol%) | Nb (mol%) | LilMe Ratio | Oxide of M adheres to surface of positive electrode active material particles | Oxide of M is not present as independent particles not adhering to surface of positive electrode active material particles | | | | |
| Example 18 | 81.85 | 14.42 | 2.78 | 0.30 | - | - | 0.65 | 1.04 | A | A | 212 | 92.5 | 81 | 25 |
| Example 19 | 81.48 | 14.43 | 2.88 | - | - | 0.51 | 0.70 | 1.04 | A | A | 212 | 93.3 | 84 | 24 |
| Example 20 | 81.58 | 14.41 | 2.86 | - | 0.49 | - | 0.66 | 1.04 | A | A | 211 | 93.8 | 86 | 22 |
| Comp. 10 | 82.07 | 14.44 | 2.78 | - | - | - | 0.71 | 1.02 | B | A | 213 | 84.9 | 78 | 42 |

### (Evaluation Results)

All of the positive electrode active materials according to Examples 1 to 17 had the composition of the following formula (1). The "Li/Me ratio" in Tables 2 and 4 indicates a compositional ratio of Li to the sum of Ni, Co, Mn and M in the positive electrode active material.

LiₐNi_{b}Co_{c}Mn_{d}MₑO_{f} (1)

in which formula (1), 1.0 ≤ a≤ 1.05, 0.8 ≤ b ≤ 0.9, b + c + d + e = 1, 1.8 ≤ f ≤ 2.2, 0.0025 ≤ e / (b + c + d + e) ≤ 0.016, and M is at least one selected from Zr, Ta and W.

Further, in each of the positive electrode active materials according to Examples 1 to 20, the WDX mapping analysis of the positive electrode active material particles in a field of view of 50 µm × 50 µm by FE-EPMA indicates that the oxide of M adhered to the surfaces of the positive electrode active material particles, and the oxide of M was not present as independent particles that did not adhere to the surface of the positive electrode active material particles.

Therefore, the initial discharge capacity and 20 cycle capacity retention rate evaluated by the coin cell were good, and the resistance increase rate after 20 cycles was lower, which indicates good battery characteristics.

On the other hand, since the positive electrode active materials according to Comparative Examples 1 to 4 and 8 to 10 did not contain any different element, the 20 cycle capacity retention rate evaluated by the coin cell was poor, and the resistance increase rate after 20 cycles was higher.

Since the positive electrode active materials according to Comparative Examples 5 to 7 had the D50 of each of the mixed Zr oxide, Ta oxide and W oxide of more than 1 µm, the oxide of M was present as independent particles that did no adhere to the surfaces of the positive electrode active material particles. Therefore, the 20 cycle capacity retention rate evaluated by the coin cell was poor, and the resistance increase rate after 20 cycles was higher.

## Claims

1. A positive electrode active material for lithium ion batteries, the positive electrode active material being represented by a composition shown in the following formula (1):
LiₐNi_{b}Co_{c}Mn_{d}MₑO_{f} (1)
in which formula (1), 1.0 ≤ a≤ 1.05, 0.8 ≤ b ≤ 0.9, b + c + d + e = 1, 1.8 ≤ f ≤ 2.2, 0.0025 ≤ e / (b + c + d + e) ≤ 0.016, and M is at least one selected from Zr, Ta and W;
wherein WDX mapping analysis of positive electrode active material particles in a field of view of 50 µm × 50 µm by FE-EPMA indicates that an oxide of the M adheres to surfaces of the positive electrode active material particles, and the oxide of the M is not present as independent particles that do not adhere to the surfaces of the positive electrode active material particles.

2. The positive electrode active material for lithium ion batteries according to claim 1, wherein the positive electrode active material for lithium ion batteries has a 50% cumulative volume particle size D50 of 3 to 18 µm.

3. A positive electrode for lithium ion batteries, comprising the positive electrode active material for lithium ion batteries according to claim 1 or 2.

4. A lithium ion battery comprising the positive electrode for lithium ion batteries according to claim 3 and a negative electrode.

5. A positive electrode active material for all-solid lithium ion batteries, comprising:
the positive electrode active material for lithium ion batteries according to claim 1 or 2; and
a coating layer made of an oxide of Li and Nb, the coating layer being provided on a positive electrode active material particle surface of the positive electrode active material for lithium ion batteries.

6. The positive electrode active material for all-solid lithium ion batteries according to claim 5, wherein a content of Nb in the positive electrode active material for all-solid lithium ion batteries is 0.5 to 0.8% by mass.

7. A positive electrode for all-solid lithium ion batteries, comprising the positive electrode active material for all-solid lithium ion batteries according to claim 5.

8. An all-solid lithium ion battery comprising the positive electrode for all-solid lithium ion batteries according to claim 7 and a negative electrode.

9. A method for producing a positive electrode active material for lithium ion batteries, the method comprising the steps of:
providing a precursor of the positive electrode active material for lithium ion batteries, the precursor being represented by a composition shown in the following formula (2):
Ni_{b}Co_{c}Mn_{d}(OH)₂ (2)
in which formula (2), 0.8 ≤ b ≤ 0.9, 0.07 ≤ c ≤ 0.15, and b + c + d = 1;
mixing at least one selected from an oxide of Zr, an oxide of Ta and an oxide of W, which has a 50% cumulative volume particle size D50 of 1 µm or less, with the precursor of the positive electrode active material for lithium ion batteries in a wet process to obtain a mixture; and
mixing the mixture with a lithium source in a dry process and firing it at 700°C or more for 4 hours or more.

10. The method for producing a positive electrode active material for lithium ion batteries according to claim 9, wherein each of the oxide of Zr, the oxide of Ta and the oxide of W has a D50 of 0.3 to 1.0 µm.

11. The method for producing a positive electrode active material for lithium ion batteries according to claim 9, wherein the step of firing the mixture comprises mixing the mixture with the lithium source in the dry process and firing it at 700 to 800 °C for 4 to 12 hours.

12. A method for producing a positive electrode active material for all-solid lithium ion batteries, the method comprising the steps of:
providing the positive electrode active material for lithium ion batteries produced by the method according to any one of claims 9 to 11;
forming a coating layer made of an oxide of Li and Nb on a positive electrode active material particle surface of the positive electrode active material for lithium ion batteries using an aqueous solution containing Li and Nb.
